# EUROPEAN PATENT SPECIFICATION

(11) **EP 0 679 610 B1**
(45) Date of publication and mention of the grant of the patent: **11.03.1998**
(21) Application number: 95302883.4
(22) Date of filing: 27.04.1995
(51) Int. Cl.: C01B 31/02, C04B 35/83

(54) **Fullerene composite**
Fullerenkomposit
Composite de fullerène

(30) Priority: 28.04.1994 JP 92381/94
(43) Date of publication of application: 02.11.1995
(73) Proprietor: Japan Science and Technology Corporation, Kawaguchi-shi, Saitama-ken 332 (JP); Tanaka, Shun-ichiro, Yokohama-shi, Kanagawa-ken (JP)
(72) Inventor: Tanaka, Shun-ichiro, Yokohama-shi, Kanagawa-ken (JP)
(74) Representative: March, Gary Clifford

(56) References cited:
- WO-A-92/04279
- NATURE, vol.358, no.6383, 16 July 1992, LONDON GB pages 220 - 222 T. W. EBBESEN ET AL.

## Description

This invention relates to a fullerene composite having a fullerene represented e.g. by C₆₀ as a matrix thereof.

The fullerene represented by the C₆₀ molecule, buckminsterfullerence, has a highly symmetrical structure where the carbon atoms are arranged like a soccer ball shape with equivalent covalent bonds. The C₆₀ molecules are packed into fcc structure interacting through van der Waals forces, which exhibits such mechanical properties as plastic deformation and work hardening.

The fullerene molecule is distinct from conventional carbon allotropes, graphite and diamond, for its metallic characteristics as plastic deformation and work hardening as noted above.

The expectation of utility of the fullerene in various applications are in carbonaceous materials having good properties such as workability.

Presently there is research into the application of fullerenes to such functional materials as superconducting materials, semiconducting materials, catalysts and materials for nonlinear optics based on the properties inherent in the fullerene.

However the fullerene has the disadvantage in being deficient in mechanical property because the molecules are bound by the van der Waals forces as described above.

An attempt at using the fullerene for various functional materials in place of the conventional carbonaceous materials, therefore, provides an industrial use but with somewhat limited application.

As described above, the fullerene molecule is distinct from conventional carbon allotropes, graphite and diamond, for its metallic characteristics as plastic deformation and work hardening. Further, the fullerene manifests such specific property as superconductivity. Thus, it is expected to find utility in such applications which benefit from these properties.

Since the fullerene such as C₆₀ is packed in a fcc structure by the van der Waals forces, it has relatively poor mechanical properties which leads to handling difficulties.

There is a desire to utilize such inherent properties of the fullerene as plastic deformation and work hardening and simultaneously enlarge the range of materials made of the fullerene, so as to promote even further industrial application of fullerenes. To utilize fullerenes as the materials for various applications wherein inherent properties as plastic deformation and work hardening are desirable, it is expected that the mechanical properties inherent in the fullerene represented by C₆₀ will attract commercial interest.

An object of this invention, therefore, is to provide a fullerene composite which has an improved mechanical strength in addition to the inherent properties of the fullerene such as plastic deformation and work hardening, and which therefore has wide potential commercial application in industrially functional materials.

The fullerene composite of this invention is characterized by comprising a matrix formed substantially of ultrafine fullerene particles of 5 to 50 nm in diameters and a reinforcing composition formed substantially of a mixture of carbon nanotubes, carbon nanocapsules, and inevitable indeterminate carbonaceous impurities incorporated with the matrix in a proportion in the range of from 15 to 45 wt% based on the amount of the matrix.

In the fullerene composite of this invention, the matrix formed substantially of ultrafine plastically deformable fullerene particles has compounded therein a reinforcing composition formed substantially of a mixture of carbon nanotubes, carbon nanocapsules, and inevitable indeterminate carbonaceous impurities. In the components of the reinforcing composition, the carbon nanotubes are unusually stable thermally and chemically and, because of the cylindrical carbon structure and the absence of dislocation and defect, can demonstrate excellent mechanical strength. In contrast, the carbon nanocapsules bring about the dislocation pinning effect by dispersion. Owing to the use of the reinforcing member which contains these carbon nanotubes and carbon nanocapsules, the matrix which is formed substantially of ultrafine fullerene particles can acquire markedly improved tensile strength, elongation, and resistance to deformation. Further, since the carbon nanotubes themselves are capable of plastic deformation, they enable the composite as a reinforcing material to acquire notably improved tensile strength compared with carbon fibres in popular use. If the reinforcing composition were to be formed solely of carbon nanotubes, for example, the composite to be produced would most likely offer only low resistance to deformation and will be deformed with low stress value.

In order that the invention may be illustrated, more easily appreciated and readily carried into effect by one skilled in the art, embodiments of the invention will now be described by way of non-limiting examples only, and with reference to the accompanying drawings, wherein:
Fig. 1 is a diagram showing by means of a model the microstructure of a fullerene composite of this invention, and
Fig. 2 is a diagram showing the relation between the amount of the reinforcing composition in the fullerene composite of this invention and the tensile strength of the composite.

Referring to these drawings,

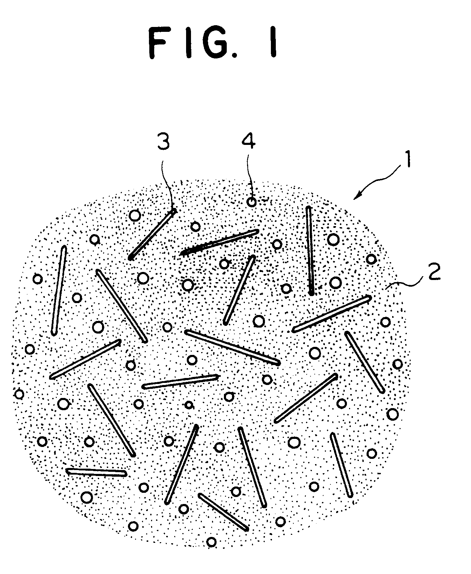

Fig. 1 is a diagram showing a model of the microstructure of a fullerene composite of this invention. A fullerene composite 1 shown in this diagram has fine fullerene particles 2 as a matrix thereof. The ultrafine fullerene particles 2 which form the matrix of this fullerene composite 1 are of 5 to 50nm in diameter. Owing to the use of these ultrafine fullerene particles 2 as the matrix, the fullerene composite has the ability to yield to plastic deformation. As a result, they contribute to improve the tensile strength of the fullerene composite 1. If the diameter of the ultrafine fullerene particles 2 is less than 5 nm, the produced fullerene composite 1 will not acquire sufficient strength. Conversely, if their diameter exceeds 50 nm, the ultrafine fullerene particles 2 will not be fully effective in imparting the ability of plastic deformation to the fullerene composite 1.

As fullerene materials, C₆₀, C₇₀, C₇₆, C₇₈, C₈₂, and C₈₄ are known. For the ultrafine fullerene particles 2, the C₆₀ molecules are preferred. This invention does not exclude the use of any one or more of the other fullerene molecules mentioned above. Depending on the purpose for which the composite is used, this invention allows use of a mixture of the C₆₀ with one or more other fullerenes. The present invention includes within its scope examples wherein the forms of the matrix of the ultrafine fullerene particles 2, are compression molded pieces and hot-pressed pieces.

The matrix which is formed from ultrafine fullerene particles 2 as mentioned above has compounded therein a reinforcing composition containing carbon nanotubes 3 and carbon nanocapsules 4. These carbon nanotubes 3 and carbon nanocapsules 4 are most preferably distributed substantially uniformly throughout the entirety of ultrafine fullerene particles 2. For the reinforcing composition, a mixture can be used which comprises the carbon nanotubes 3 and carbon nanocapsules 4 mentioned above and inevitable indeterminate carbonaceous impurities.

The proportions of the carbon nanotubes, carbon nanocapsules, and inevitable indeterminate carbonaceous impurities contained in the reinforcing composition are preferably such that the weight ratio of the carbon nanotubes may be 30% to 90%. If the weight ratio of the carbon nanotubes is less than 30% or more than 90%, the reinforcing member may not be fully effective in improving the mechanical strength of the fullerene composite produced.

The carbon nanotubes 3 can be and preferably are giant fullerenes with a hollow cylindrical structure (helical arrangement) which are formed in the cathode piled mass formed through the production of fullerenes by arc discharge. The cylindrical structure wherein dislocation and defects are absent provides attractively high stability both thermally and chemically, and can confer outstanding mechanical strength. Further, since the carbon nanotubes in themselves possess the ability of plastic deformation, they can confer excellent effects in enhancing the tensile/compressive strength of the produced fullerene composite, compared to carbon fibres which have been used for reinforcement. To produce sufficiently improved strength for a reinforcing composition, the carbon nanotubes 3 preferably have a diameter of 2 to 60 nm and a length of 0.5 to 5 µm.

The carbon nanocapsules 4 can be and preferably are giant fullerenes with a spherical basket structure which are formed in the piled mass of a cathode during the production of fullerenes by arc discharge. Carbon nanocapsules 4 of this type provide a dislocation pinning effect by dispersion. To optimise particle dispersing effects, the carbon nanocapsules preferably have a diameter of 50 to 200 nm.

The reinforcing composition which contains such carbon nanotubes 3 and carbon nanocapsules 4 as described above is preferably compounded in such an amount with the ultrafine fullerene particles 2 in the matrix that the amount of the mixture thereof plus the inevitable indeterminate carbonaceous impurities is 15 to 45 wt%. It can be of significant importance for the fullerene composite 1 of this invention to include such an amount of the reinforcing composition. If the amount of the reinforcing composition incorporated is less than 15 wt%, the effect of the compounding will not be sufficient. Conversely, if this amount exceeds 45 wt%, a composite of practical utility will not be obtained because the inherent properties of the ultrafine fullerene particles 2 are degraded and the compression mouldability of the ultrafine fullerene particles 2 is impaired. For the compounding effect to be enhanced further, the amount of the reinforcing composition to be incorporated is more preferably 20 to 40 wt%.

Since the fullerene composite 1 of this invention includes as a reinforcing composition a mixture formed mainly of carbon nanotubes 3 and carbon nanocapsules 4 and this mixture is preferably thoroughly dispersed in the matrix formed of the ultrafine fullerene particles 2, it combines a dislocation pinning effect by dispersion provided by the carbon nanocapsules 4 with the effect of improving the mechanical strength due to the particular shape of and the plastic deformation conferred by the carbon nanotubes 3. These effects contribute to significantly enhance the mechanical strength of compression moulded articles made of the ultrafine fullerene particles 2. Owing to the use of the aforementioned mixture as the reinforcing composition, the fullerene composite 1 using the ultrafine fullerene particles 2 as a matrix can acquire improved elongation and resistance to deformation in addition to improvement in tensile and/or compressive strength. If the reinforcing composition were formed solely of carbon nanotubes 3 the fullerene composite 1 would have only low resistance to deformation and will be readily deformed.

The fullerene composites 1 of this invention as described above can be manufactured as follows, for example.

Initially we describe how to prepare ultrafine fullerene particles as C₆₀ particles and a mixture which contains carbon nanotubes, carbon nanocapsules, and inevitable indeterminate carbonaceous impurities in prescribed proportions.

With respect to the ultrafine fullerene particles, a fullerene is first formed by an arc discharge method using carbon rods or carbon grains as an electrode or the laser ablation method including irradiation of the surface of graphite with an ultraviolet laser. Since the fullerene is formed as mixed in soot, it is extracted from the soot by a collecting device with filters and solvents such as benzene. The fullerene, when necessary, may be refined to a desired extent by means of liquid chromatography, for example. From the fullerene thus formed, the ultrafine fullerene particles can be produced by the gas evaporation method, for example. To be more specific, the ultrafine fullerene particles can be obtained by evaporating the fullerene particles in a reduced-pressure atmosphere of He, for example, and causing the vapour to adhere to a cold finger cooled by liquid nitrogen.

The carbon nanotubes and carbon nanocapsules are contained in the substance which is deposited on the cathode side during the process of arc discharge. They are obtained by pulverizing the deposited substance and separating them from the pulverized powder by the use of an organic solvent such as ethanol. By this refining method, a mixture formed mainly of carbon nanotubes and carbon nanocapsules is obtained. At times, this mixture contains such impurities as graphitic substance and amorphous carbon. The presence of up to about 60% of indeterminate carbonaceous impurities in the mixture does not appear to adversely affect composites according to this invention. When the carbon nanotubes and carbon nanocapsules which have been refined as described above are added to water containing a dispersant and then subjected to centrifugation, they can be refined to an even greater extent.

The extremely fine fullerene particles produced by the method described above and the reinforcing composition formed of a mixture mainly containing carbon nanotubes and carbon nanocapsules in prescribed proportions are mutually dispersed thoroughly. Then, the composite material consequently formed is compression moulded at room temperature to obtain embodiments of the fullerene composite. For manufacture of the composite, hot-pressing may be adopted, for example.

Improving the orientation of the reinforcing composition components, particularly the carbon nanotubes contained therein, during the moulding step is also advantageous in composites of this invention. Specifically, the strength of the reinforcing composition to resist force exerted in a direction perpendicular to the direction of orientation of the carbon nanotubes can be significantly increased by raising the degree of orientation of carbon nanotubes in one fixed direction. Better orientation of the carbon nanotubes can be achieved, for example, by adopting an array method of orientation which comprises packing the composite material in a metallic tube and stretching the metallic tube.

Specific embodiments of the fullerene composite obtained by the methods described above are now described together with results of an evaluation of properties.

### Example 1:

First, a carbon rod (99.999%) was arc discharged in an atmosphere of He and the soot consequently obtained was subjected to liquid chromatography to produce a refined C₆₀ powder. Then, the C₆₀ powder was evaporated in an atmosphere of He of 1.33 x 10³ Pa and the vapour was deposited on a rotor cooled with liquid nitrogen. Consequently, ultrafine C₆₀ powder having a particle diameter of 10 to 30 nm was obtained.

The deposit formed on the cathode side during the arc discharge of the carbon rod mentioned above was pulverized. The product was refined with ethanol to obtain a mixture consisting of carbon nanotubes, carbon nanocapsules, and inevitable indeterminate carbonaceous impurities. This mixture was found to contain about 60% by weight of carbon nanotubes. The carbon nanotubes were hollow tubes having an average diameter of 10 nm and an average length of 3 µm and the carbon nanocapsules were ellipsoids having an average major diameter of 50 nm.

Then, the mixture of carbon nanotubes, carbon nanocapsules, and inevitable indeterminate carbonaceous impurities was added as a reinforcing material in an amount of 30% by weight to the ultrafine C₆₀ powder and dispersed therein by ultrasonic wave. Subsequently, the composite material consequently obtained was compressionmoulded in the shape of discs 3 mm in diameter under a moulding pressure of 123 MPa at room temperature in the open air. The discs were subjected to cutting work to obtain the fullerene composite in the form of compression mouldedpieces (2.5 x 2 x 1 mm).

When the compression moulded fullerene composites were observed as to microstructure, carbon nanotubes and carbon nanocapsules were found to be uniformly dispersed therein. When the compression moulded fullerene composite mentioned above were tested for tensile strength by the use of a hard beam type tensile tester (speed of tension 2.5 µm/s) at room temperature, satisfactory high tensile strengthsof 10 MPa were observed.

### Comparative Example 1:

A compression moulded fullerene composite was manufactured by following the procedure of Example 1 while changing the amount of the mixture of carbon nanotubes, carbon nanocapsules, and inevitable indeterminate carbonaceous impurities added to the ultrafine C₆₀ powder prepared in Example 1 to 5% by weight. When this compression moulded fullerene composite was tested for tensile strength in the same manner as in Example 1, it showed a low tensile strength of 0.6 MPa, a magnitude equal to that obtained by a compression moulded mass using ultrafine C₆₀ powder alone.

### Examples 2 through 5:

Compression moulded fullerene composites were manufactured by following the procedure of Example 1 while changing the mixing ratio of the ultrafine C₆₀ powder with the mixture of carbon nanotubes, carbon nanocapsules, and inevitable indeterminate carbonaceous impurities (the carbon nanotubes' content in the mixture being shown in Table 1) as shown in Table 1. The compression moulded fullerene composites were tested for tensile strength in the same manner as in Example 1. The results are also shown in Table 1.

**Table 1**

| | Amount of carbon nanotubes in reinforcing composition (wt %) | Amount of reinforcing composition incorporated (wt%) | Tensile strength (MPa) |
|---|---|---|---|
| Example 2 | 35 | 20 | 5 |
| Example 3 | 50 | 30 | 10 |
| Example 4 | 40 | 40 | 10 |
| Example 5 | 25 | 40 | 6 |

The difference in tensile strength between the compression moulded fullerene composite according to Example 4 and the compression moulded fullerene composite according to Example 5 is thought to stem from the difference in percentage composition of the components of the reinforcing composition.

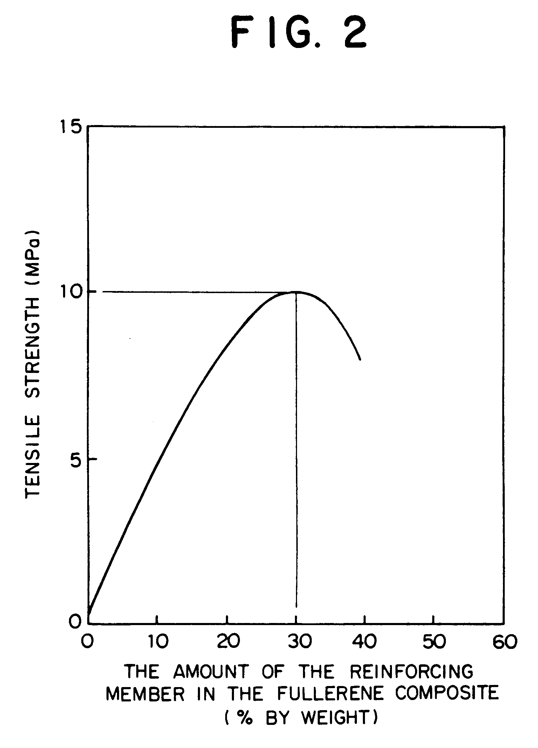

Fig. 2 shows the relation between the amount of reinforcing composition in the compression moulded fullerene composite and the tensile strength of the composite. The results of tensile strength shown in Fig. 2 are those obtained by using mixtures containing carbon nanotubes in a fixed ratio of 50% by weight. It is clearly noted from this diagram that when the mixture of carbon nanotubes, carbon nanocapsules, and inevitable indeterminate carbonaceous impurities are compounded in an amount in the range of from 15 to 45% by weight with the ultrafine fullerene particles, the fullerene composites produced acquire significantly improved strength and functional materials using the fullerene matrix acquire markedly improved practical utility.

### Example 6:

The ultrafine C₆₀ powder and the mixture of carbon nanotubes, carbon nanocapsules, and inevitable indeterminate carbonaceous impurities prepared in Example 1 were compounded at the same ratio as in Example 1. The composite material obtained consequently was sealed in an Ag tube 8 mm of outer diameter, 6 mm of inner diameter, and 150 mm in length. This Ag tube was swaged, rolled, and drawn to a final outer diameter of 0.5 mm. Then, the drawn line was stripped off the Ag tube to obtain a moulded fullerene composite having carbon nanotubes oriented in the direction of line drawing.

When this moulded fullerene composite was tested for tensile strength in the same manner as in Example 1, it showed substantially improved high tensile strength of 15 MPa.

As demonstrated by the working examples cited above, the fullerene composites of this invention show practical strength and resistance to deformation in addition to such metallic properties as plastic deformation and work hardening and such specific properties e.g. superconductivity as are inherent in the fullerene such as C₆₀. When fullerene composites of this invention are incorporated in functional materials by making effective use of the desirable properties of the fullerene, they can impart much better handling properties to the materials. Thus, the present invention widens the range of applications wherein fullerenes can be used.

## Claims

1. A fullerene composition, comprising a matrix formed substantially of ultrafine fullerene particles having diameters of 5 to 50 nm and a reinforcing composition comprising a mixture substantially of carbon nanotubes, carbon nanocapsules, and inevitable indeterminate carbonaceous impurities, said reinforcing composition being incorporated in the matrix in an amount of 15 to 45% by weight, based on the total weight of said matrix.

2. A fullerene composite according to claim 1, wherein said ultrafine fullerene particles are formed mainly of C₆₀ molecules and preferably consist essentially of said C₆₀ molecules.

3. A fullerene composite according to claim 1 or 2, wherein said reinforcing composition contains said carbon nanotubes in an amount of 30 to 90% by weight.

4. A fullerene composite according to any preceding claim, wherein said carbon nanotubes and carbon nanocapsules are substantially uniformly distributed throughout said composite.

5. A fullerene composite according to any preceding claim, wherein said carbon nanotubes have a diameter of 2 to 60 nm and a length of 0.5 to 5 µm.

6. A fullerene composite according to any preceding claim, wherein said carbon nanocapsules have a diameter of 50 to 200 nm.

7. A fullerene composite according to any preceding claim, wherein said carbon nanotubes are oriented in a substantially fixed direction in said composite.

8. A method of making a fullerene composition as claimed in any preceding claim which involves compression moulding of a mixture of ultrafine fullerene particles as defined in any preceding claim and a reinforcing composition as defined in any preceding claim.

9. Use of a fullerene composite as claimed in any one of claims 1 to 7 in the production of an industrial article.

## Patentansprüche

1. Fullerenkomposit mit einer Matrix, die im wesentlichen aus ultrafeinen Fulleren-Teilchen mit Durchmessern von 5 bis 50 nm gebildet ist, und einer Verstärkungszusammensetzung, die aus einem Gemisch im wesentlichen aus Kohlenstoff-Nanoröhrchen, Kohlenstoff-Nanokapseln und unvermeidbaren, unbestimmten, kohlenstoffhaltigen Verunreinigungen besteht und in einer Menge von 15 bis 45 Gew.-%, bezogen auf das Gesamtgewicht der Matrix, in die Matrix eingebaut ist.

2. Fullerenkomposit nach Anspruch 1, bei dem die ultrafeinen Fulleren-Teilchen hauptsächlich aus C₆₀-Molekülen gebildet sind und vorzugsweise im wesentlichen aus den genannten C₆₀-Molekülen bestehen.

3. Fullerenkomposit nach Anspruch 1 oder 2, bei dem die genannte Verstärkungszusammensetzung die Kohlenstoff-Nanoröhrchen in einer Menge von 30 bis 90 Gew.-% enthält.

4. Fullerenkomposit nach einem vorhergehenden Anspruch, bei dem die genannten Kohlenstoff-Nanoröhrchen und Kohlenstoff-Nanokapseln im wesentlichen gleichmäßig in dem Verbundstoff verteilt sind.

5. Fullerenkomposit nach einem vorhergehenden Anspruch, bei dem die genannten Kohlenstoff-Nanoröhrchen einen Durchmesser von 2 bis 60 nm und eine Länge von 0,5 bis 5 µm haben.

6. Fullerenkomposit nach einem vorhergehenden Anspruch, bei dem die genannten Kohlenstoff-Nanokapseln einen Durchmesser von 50 bis 200 nm haben.

7. Fullerenkomposit nach einem vorhergehenden Anspruch, bei dem die genannten Kohlenstoff-Nanoröhrchen in einer im wesentlichen festgelegten Richtung in dem Verbundstoff orientiert sind.

8. Verfahren zur Herstellung eines Fullerenkomposits, wie er in einem vorhergehenden Anspruch beansprucht ist, durch Formpressen eines Gemisches aus ultrafeinen Fulleren-Teilchen, wie sie in einem vorhergehenden Anspruch definiert sind, und einer Verstärkungszusammensetzung, wie sie in einem vorhergehenden Anspruch definiert ist.

9. Verwendung eines Fullerenkomposits, wie er in einem der Ansprüche 1 bis 7 beansprucht ist, zur Herstellung eines industriellen Artikels.

## Revendications

1. Composition de fullerène comprenant une matrice formée essentiellement d'ultrafines particules de fullerène ayant un diamètre de 5 à 50 nm et une composition de renfort comprenant un mélange essentiellement de nanotubes de carbone, de nanocapsules de carbone et d'inévitables impuretés carbonées indéterminées, ladite composition de renfort étant incorporée dans la matrice en une proportion de 15 à 45% en poids, rapportée au poids total de ladite matrice.

2. Composite de fullerène selon la revendication 1, dans lequel lesdites ultrafines particules de fullerène sont principalement formées de molécules en C₆₀ et, de préférence, sont essentiellement constituées desdites molécules en C₆₀.

3. Composite de fullerène selon la revendication 1 ou 2, dans lequel ladite composition de renfort contient lesdits nanotubes de carbone en une proportion de 30 à 90% en poids.

4. Composite de fullerène selon l'une quelconque des revendications précédentes, dans lequel lesdits nanotubes de carbone et lesdites nanocapsules de carbone sont réparties essentiellement uniformément dans tout ledit composite.

5. Composite de fullerène selon l'une quelconque des revendications précédentes, dans lequel lesdits nanotubes de carbone ont un diamètre de 2 à 60 nm et une longueur de 0,5 à 5 µm.

6. Composite de fullerène selon l'une quelconque des revendications précédentes, dans lequel lesdites nanocapsules de carbone ont un diamètre de 50 à 200 nm.

7. Composite de fullerène selon l'une quelconque des revendications précédentes, dans lequel lesdits nanotubes de carbone sont orientés dans une direction essentiellement fixée dans ledit composite.

8. Procédé de fabrication d'une composition de fullerène selon l'une quelconque des revendications précédentes qui met en jeu le moulage par compression d'un mélange d'ultrafines particules de fullerène telles que définies dans l'une quelconque des revendications précédentes et d'une composition de renfort telle que définie dans l'une quelconque des revendications précédentes.

9. Utilisation d'un composite de fullerène selon l'une quelconque des revendications 1 à 7 pour produire un article industriel.
